# EUROPÄISCHE PATENTSCHRIFT

(11) **EP 2 173 915 B1**
(45) Veröffentlichungstag und Bekanntmachung des Hinweises auf die Patenterteilung: **26.01.2011**
(21) Anmeldenummer: 08773377.0
(22) Anmeldetag: 10.06.2008
(51) Int. Cl.: C21B 13/02

(54) **VERFAHREN UND VORRICHTUNG ZUR ERZEUGUNG VON EISENSCHWAMM**
PROCESS AND APPARATUS FOR PRODUCING IRON SPONGE
PROCÉDÉ ET DISPOSITIF DE FORMATION D'ÉPONGES DE FONTE

(30) Priorität: 28.06.2007 AT 10032007
(43) Veröffentlichungstag der Anmeldung: 14.04.2010
(73) Patentinhaber: Siemens VAI Metals Technologies GmbH, 4031 Linz (AT)
(72) Erfinder: VULETIC, Bogdan, 40457 Düsseldorf (DE)
(74) Vertreter: Maier, Daniel Oliver
(86) Internationale Anmeldenummer: PCT/EP2008/004623
(87) Internationale Veröffentlichungsnummer: WO 2009/000409

(56) Entgegenhaltungen:
- WO-A-00/36157
- WO-A-00/36159
- WO-A-99/04045
- DE-A1- 2 659 670
- DE-A1- 19 625 127

## Beschreibung

Die Erfindung betrifft ein Verfahren und eine Vorrichtung zur Erzeugung von Eisenschwamm aus einem eisenoxidhaltigen stückigen Gut durch Direktreduktion in einem Reduktionsschacht unter Verwendung eines Reduktionsgases.

Bei der Erzeugung von Eisenschwamm, auch Direktreduktionseisen genannt, durch Direktreduktion wird der Reduktionsschacht von oben mit stückigen Eisenoxiden, wie Pellets und/oder Stückerzen, beschickt, welche unter dem Gegenstromprinzip mit einem aufsteigenden Reduktionsgas durchströmt werden. Das in den Reduktionsschacht eingeleitete, vorzugsweise 750 bis 900° C heiße, staubhaltige, kohlenmonoxid- und wasserstoffreiche, insbesondere 70 bis 90% CO und H₂ enthaltende, Reduktionsgas wird vorzugsweise in einem Einschmelzvergaser oder in einem anderen Gaserzeuger erzeugt. Auf diese Weise wir das stückige Eisenoxid ganz oder teilweise zu Eisenschwamm reduziert und es lässt sich ein Metallisierungsgrad von 80 bis hin zu über 95% des Einsenschwamms erreichen.

In den aus dem Stand der Technik bekannten Vorrichtungen und Verfahren wird das Reduktionsgas am Umfang des Reduktionsschachtes, beispielsweise über einen ringförmigen, aus feuerfesten Steinen gebildeten Kanal, genannt Bustle-Kanal, eingeleitet. Bei der Einleitung des Reduktionsgases über solch einen Bustle-Kanal gelangt jedoch weniger Reduktionsgas in die Reduktionsschachtmitte, so dass der Metallisierungsgrad im Randbereich höher als zur Reduktionsschachtmitte hin ist. Da eine Schüttung mit einem niedrigeren Metallisierungsgrad ein größeres Schüttgewicht hat als eine mit einem höheren Metallisierungsgrad, und auch stärker zerfällt, wird der Gang der Schüttung auf die Reduktionsschachtmitte hin konzentriert. Durch diese Mittelgängigkeit wird die Ungleichverteilung der spezifischen Reduktionsgasmenge noch verstärkt. Die ungleichmäßige Reduktionsgasverteilung ist stärker, je größer der Reduktionsschachtdurchmesser und je staubhaltiger das Reduktionsgas ist. Außerdem bedingt der aus feuerfesten Steinen gebildete Bustle-Kanal eine Ausmauerung, welche aufwendig, verschleißanfällig und daher immer wieder zu erneuern ist.

In DE2628447A1 und DE19625127A1 wird zusätzlich zum Bustle-Kanal eine zentrale Einspeisevorrichtung unterhalb der Ebene des Bustle-Kanals beschrieben. Ebenfalls unterhalb der Ebene eines Bustle-Kanals befinden sich gemäß EP0904415A1 zusätzliche Reduktionsgaseinlässe in Form von nach unten offenen Kanälen oder schräg nach unten gerichteten Leitungen mit geöffnetem innerem Ende.

Diese Vorrichtungen bewirken zwar eine bessere Versorgung mit Reduktionsgas zur Mitte - hin, der Reduktionsschacht mit Bustle-Kanal und Gasverteiler-Kanälen in der Mitte ist jedoch aufwendig und hat noch den Nachteil, dass das Reduktionsgas mit gleichem Druck auf zwei verschiedenen Ebenen eingeleitet wird, wodurch spezifisch mehr Reduktionsgas pro m² durch den höheren Einlass eingeleitet wird, da dort der Weg des Gases nach oben kürzer ist. Weniger Reduktionsgas spezifisch bedeutet aber einen niedrigeren Metallisierungsgrad der Schüttung in der Reduktionsschachtmitte.

Aufgabe der vorliegenden Erfindung ist es daher, ein einfaches Verfahren und eine einfache Vorrichtung zu finden, wobei ohne Verwendung eines Bustle-Kanals und der damit verbundenen aufwendigen und verschleißanfälligen Ausmauerung des Reduktionsschachtes eine gleichmäßige Verteilung des Reduktionsgases und damit eine gleichmäßige Metallisierung erfolgt.

Gegenstand der Erfindung ist demnach ein Verfahren zur Erzeugung von Eisenschwamm aus eisenoxidhaltigem stückigen Gut durch Direktreduktion in einem Reduktionsschacht unter Verwendung eines Reduktionsgases, das dadurch gekennzeichnet ist, dass das gesamte Reduktionsgas mittels mehrerer sternartiger oder parallel zueinander angeordneter Reduktionsgasverteilerkanäle vorzugsweise in das untere Viertel des Reduktionsschachtes eingeleitet wird.

Zur Durchführung des Verfahrens wird eisenoxidhaltiges stückiges Gut, wie Pellets und/oder Stückerz, von oben in einen Reduktionsschacht eingebracht. Zusätzlich wird, vorzugsweise 750 bis 900° C heißes, insbesondere im Einschmelzvergaser erzeugtes, staubhaltiges, kohlenmonoxid- und wasserstoffreiches, insbesondere 70 bis 90% CO und H₂ enthaltendes, Gas, genannt Reduktionsgas, vorzugsweise im unteren Viertel des Reduktionsschachtes über Reduktionsgasverteilerkanäle eingeleitet. Das eingeleitete Reduktionsgas steigt nach oben und reduziert dabei das Eisenoxid zu Eisenschwamm. Die ausschließliche Einleitung des gesamten Reduktionsgases über die sternartig oder parallel angeordneten Reduktionsgasverteilerkanäle bewirkt hierbei eine gleichmäßige Verteilung des Reduktionsgases und des darin enthaltenen Staubes über den gesamten Reduktionsschachtquerschnitt.

Aus der DE 28 10 657 ist ein Reduktionsschacht bekannt, der neben einer Ringleitung weitere Einrichtungen zum Eintrag von Prozessgasen, wie z.B. Erdgas aufweist. Nachteilig sind dabei der ungleichmäßige Eintrag des Reduktionsgases über die Ringleitung und der hohe Vorrichtungsaufwand.

Die WO 00/36159 beschreibt einen Reduktionsschacht bei dem in zwei Ebenen bzw. Zonen Reduktionsgas eingebracht wird. Nachteilig sind vor allem der große anlagentechnische Aufwand und die hohen Anforderungen an die Regelung des Reduktionsgaseintrages.

Die Reduktionsgasverteilerkanäle sind auf Tragrohren befestigte, nach unten offene Halbrohrschalen mit nach unten verlängerten parallelen Wänden. Bei Beschickung des Reduktionsschachtes mit der Eisenoxid-Schüttung von oben entsteht unter den Halbrohrschalen ein schüttungsfreier Raum, von dem aus das Reduktionsgas gleichmäßig in die Schüttung gelangt.

Die Reduktionsgasverteilerkanäle können sternartig angeordnet und gleich oder verschieden lang sein. Bevorzugt sind sie verschieden lang, wobei die kürzeren Reduktionsgasverteilerkanäle vorzugsweise fliegend gelagert und die längeren Reduktionsgasverteilerkanäle vorzugsweise durch wassergekühlte Stützrohre abgestützt sind. Sternartige Anordnung bedeutet, dass sich mehrere, vorzugsweise 4 bis 12, insbesondere 8, Reduktionsgasverteilerkanäle von der Reduktionsschachtwand in das Innere des Reduktionsschachtes erstrecken, wobei alle Reduktionsgasverteilerkanäle zum Mittelpunkt des Reduktionsschachtes hin ausgerichtet sind. Bevorzugt ist dann jeweils ein längerer neben einem kürzeren Reduktionsgasverteilerkanal angeordnet, wobei die längeren Reduktionsgasverteilerkanäle vorzugsweise über den Austragtrichtern für den Eisenschwamm angebracht sind. Am unteren Ende der Austragtrichter sind vorzugsweise wassergekühlte Austragsschnecken oder andere Austragsvorrichtungen angeordnet.

Vorzugsweise sind die Reduktionsgasverteilerkanäle in einer Ebene.

Bevorzugt bei einer Anordnung bei der jeweils ein längerer neben einem kürzeren Reduktionsgasverteilerkanal angeordnet ist, ist es jedoch auch möglich die kürzeren, fliegend gelagerten Reduktionsgasverteilerkanäle knapp oberhalb der längeren, abgestützten Reduktionsgasverteilerkanäle anzubringen. Dies kann gegebenenfalls bei Verwendung von zum Zerfall und Brückenbildung neigenden Erzen von Vorteil sein. Wichtig hierbei ist es, dass die verschieden hohen Reduktionsgasverteilerkanäle so knapp übereinander liegen, dass praktisch kaum Druckunterschied bei der Einleitung des Reduktionsgases auftritt.

Die Reduktionsgasverteilerkanäle können auch parallel angeordnet und gleich oder verschieden lang sein. Bevorzugt sind die Reduktionsgasverteilerkanäle dabei in einer Ebene. Vorzugsweise bei kleinen Reduktionsschachtdurchmessern wird das gesamte Reduktionsgas über mehrere, vorzugsweise 2 bis 8, insbesondere 4, von der Reduktionsschachtwand bis zur gegenüberliegenden Reduktionsschachtwand durchgehende, parallel angeordnete Reduktionsgasverteilerkanäle eingeleitet. Bei

Reduktionsschächten mittlerer Größe können zusätzlich zwei Reduktionsgasverteilerkanäle angeordnet sein, die sich gegenüberliegen, entlang des Schachtdurchmessers zur Mitte hin ausgerichtet sind und parallel zu den anderen, von der Reduktionsschachtwand bis zur gegenüberliegenden Reduktionsschachtwand durchgehenden, Reduktionsgasverteilerkanälen sind. Diese zusätzlichen kürzeren Reduktionsgasverteilerkanäle sind bevorzugt durch wassergekühlte Stützrohre abgestützt.

Ein weiterer Gegenstand der Erfindung ist eine Vorrichtung zur Erzeugung von Eisenschwamm aus eisenoxidhaltigem stückigen Gut durch Direktreduktion in einem Reduktionsschacht (1) unter Verwendung eines Reduktionsgases, welche dadurch gekennzeichnet ist, dass die Zufuhr des gesamten Reduktionsgases über mehrere, vorzugsweise im unteren Viertel des Reduktionsschachtes (1) sternartig angeordnete Reduktionsgasverteilerkanäle (2a, 2b) oder vorzugsweise im unteren Viertel des Reduktionsschachtes (1) parallel zueinander angeordnete Reduktionsgasverteilerkanäle (2) erfolgt.

Die Erfindung wird im Folgenden anhand in den Figuren dargestellter Ausführungsbeispiele näher erläutert. Es zeigen:
- Fig. 1: einen senkrechten Schnitt durch einen Reduktionsschacht (1) in dem ein Reduktionsgasverteilerkanal (2a, 2d) und ein Reduktionsgasverteilerkanal (2b) abgebildet ist,
- Fig. 2: einen senkrechten Schnitt durch einen Reduktionsgasverteilerkanal (2) mit Tragrohr (3) für die Einleitung des Reduktionsgases in die Schüttung,
- Fig. 3: einen horizontalen Schnitt durch den Reduktionsschacht (1) nach Fig. 1 oberhalb der sternartig angeordneten Reduktionsgasverteilerkanäle (2a) und (2b),
- Fig. 4: einen horizontalen Schnitt durch den Reduktionsschacht (1) nach Fig. 1 oberhalb der parallel angeordneten Reduktionsgasverteilerkanäle (2c) und
- Fig. 5: einen horizontalen Schnitt durch den Reduktionsschacht (1) nach Fig. 1 oberhalb der parallel angeordneten Reduktionsgasverteilerkanäle (2c) und (2d).

Der von oben über Verteilerrohre (5) mit eisenoxidhaltigem stückigen Gut beschickte zylindrische Reduktionsschacht (1) ist im unteren Viertel mit mehreren Reduktionsgasverteilerkanälen (2), durch welche Reduktionsgas in den Reduktionsschacht (1) eingeleitet wird, versehen. Am unteren Ende des Reduktionsschachtes (1) wird das zu Eisenschwamm reduzierte Gut durch Austragstrichter (6) ausgeführt. Am unteren Ende der Austragtrichter (6) sind wassergekühlte Austragsschnecken oder andere Austragsvorrichtungen angeordnet, welche in den Figuren nicht dargestellt sind.

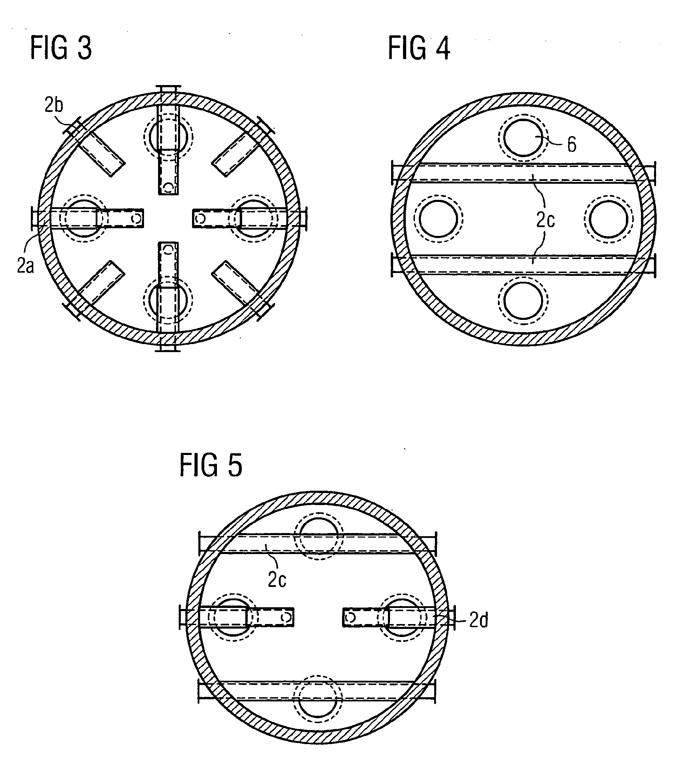

Reduktionsgasverteilerkanäle (2) sind nach unten offene Halbrohrschalen mit nach unten verlängerten parallelen Wänden, die, wie in FIG. 4 ersichtlich, auf Tragrohren (3), welche im Inneren vorzugsweise durch Wasser gekühlt werden, befestigt sind.

Die Reduktionsgasverteilerkanäle (2) können sternartig angeordnet sein.

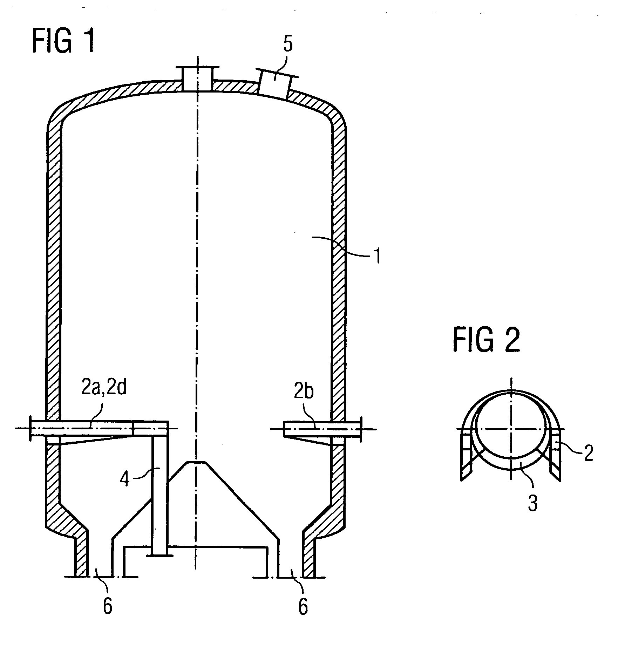

Die sternartig angeordneten Reduktionsgasverteilerkanäle (2a, 2b) können gleich lang oder verschieden lang sein. Bevorzugt sind sie verschieden lang, besonders bevorzugt wechseln sich, wie in FIG. 3 dargestellt, längere Reduktionsgasverteilerkanäle (2a) und kürzere Reduktionsgasverteilerkanäle (2b) ab. Über die längeren Reduktionsgasverteilerkanäle (2a) wird dann vorzugsweise der mittlere Bereich und ein Teil, insbesondere ca. 50%, des äußeren Bereiches des Reduktionsschachtes (1) und über die kürzeren Reduktionsgasverteilerkanäle (2b) der restliche Teil des äußeren Bereiches mit dem Reduktionsgas versorgt. Längere Tragrohre (3), wie sie für längere Reduktionsgasverteilerkanäle (2a) benötigt werden, sind zusätzlich meist durch wie in FIG.1 gezeigte wassergekühlte Stützrohre (4) abgestützt, die am Boden des Reduktionsschachtes (1) befestigt sind, während die Tragrohre (3) der kürzeren Reduktionsgasverteilerkanäle (2b) vorzugsweise fliegend gelagert sind.

Bei Reduktionsschächten (1) mit sternartiger Anordnung der Reduktionsgasverteilerkanäle (2a, 2b) mit einer relativ niedrigeren Anzahl von Austragstrichtern (6), vorzugsweise bei weniger als 8, insbesondere bei 4, sind bevorzugt die längeren Reduktionsgasverteilerkanäle (2a) über den Austragstrichtern (6) und die kürzeren (2b) über den Räumen zwischen den Austragstrichtern (6) angeordnet.

Vorzugsweise sind die Reduktionsgasverteilerkanäle (2a, 2b) in einer Ebene.

Bevorzugt bei einer Anordnung bei der jeweils ein längerer (2a) neben einem kürzeren (2b) Reduktionsgasverteilerkanal angeordnet ist, ist es jedoch auch möglich die kürzeren, fliegend gelagerten Reduktionsgasverteilerkanäle (2b) knapp oberhalb der längeren, abgestützten Reduktionsgasverteilerkanäle (2a) anzubringen. Dies kann gegebenenfalls bei Verwendung von zum Zerfall und Brückenbildung neigenden Erzen von Vorteil sein. Wichtig hierbei ist es, dass die verschieden hohen Reduktionsgasverteilerkanäle (2a, 2b) so knapp übereinander liegen, dass praktisch kaum Druckunterschied bei der Einleitung des Reduktionsgases auftritt.

Die Reduktionsgasverteilerkanäle (2) können auch parallel zueinander angeordnet sein.

Die parallel zueinander angeordneten Reduktionsgasverteilerkanäle (2c, 2d) können gleichlang oder verschieden lang sein und liegen bevorzugt in einer Ebene. Sind die Reduktionsgasverteilerkanäle (2) parallel angeordnet, so reichen insbesondere bei kleinen Reduktionsschächten zwei oder mehrere parallel zueinander angeordnete Reduktionsgasverteilerkanäle (2c), welche wie in FIG. 5 von der Reduktionsschachtwand bis zur gegenüberliegenden Reduktionsschachtwand durchgehend gestaltet sind.

Bei Reduktionsschächten mittlerer Größe, etwa bei Reduktionsschächten von 6 bis 8 m Durchmesser, ist es vorteilhaft, zwei weitere Reduktionsgasverteilerkanäle (2d) entlang des Durchmessers des Reduktionsschachtes (1) und gegenüberliegend, und die restlichen Reduktionsgasverteilerkanäle (2c) parallel dazu und vorzugsweise von der Reduktionsschachtwand bis zur gegenüberliegenden Reduktionsschachtwand durchgehend, wie in FIG. 5 gezeigt, anzuordnen. Die Reduktionsgasverteilerkanäle (2d) sind dabei vorzugsweise durch wassergekühlte Stützrohre (4), analog zur Abstützung der sternartigen Reduktionsgasverteilerkanäle (2a), abgestützt.

## Patentansprüche

1. Verfahren zur Erzeugung von Eisenschwamm aus eisenoxidhaltigem stückigen Gut durch Direktreduktion in einem Reduktionsschacht unter Verwendung eines Reduktionsgases, **dadurch gekennzeichnet, dass** das gesamte Reduktionsgas mittels mehrerer sternartiger oder parallel zueinander angeordneter Reduktionsgasverteiler kanäle vorzugsweise in das untere Viertel des Reduktionsschachtes und gleichmäßig verteilt über den gesamten Reduktionsschachtquerschnitt eingeleitet wird, wobei die Reduktionsgasverteilerkanäle in einer Ebene angeordnet sind oder bei sternartig angeordneten Reduktionsgasverteilerkanälen jeweils ein längerer neben einem kürzeren Reduktionsgasverteilerkanal angeordnet ist, wobei die kürzeren Reduktionsgasverteilerkanäle knapp oberhalb von den längeren Reduktionsgasverteilerkanälen derart angeordnet sind, dass praktisch kaum ein Druckunterschied bei der Einleitung des Reduktionsgases auftritt.

2. Verfahren nach Anspruch 1, **dadurch gekennzeichnet, dass** sich bei Beschickung des Reduktionsschachtes unter den Reduktionsgasverteilerkanälen, die als nach unten offene Halbrohrschalen ausgebildet sind, schüttungsfreie Räume ausbilden, von dem aus das Reduktionsgas gleichmäßig in die Schüttung gelangt.

3. Vorrichtung, zur Erzeugung von Eisenschwamm aus eisenoxidhaltigem stückigen Gut durch Direktreduktion unter Verwendung eines Reduktionsgases, mit einem Reduktionsschacht (1) und Reduktionsgasverteilerkanälen (2) zur Zufuhr des gesamten Reduktionsgases in den Reduktionsschacht (1), **dadurch gekennzeichnet, dass** im unteren Viertel des Reduktionsschachtes (1) sternartig angeordnete Reduktionsgasverteilerkanäle (2a, 2b) oder parallel zueinander angeordnete Reduktionsgasverteiler kanäle (2) vorgesehen sind, wobei die Reduktionsgasverteilerkanäle (2, 2a, 2b) nach unten offene Halbrohrschalen mit nach unten verlängerten parallelen Wänden und Tragrohre (3) aufweisen, wobei die Reduktionsgasverteilerkanäle (2) in einer Ebene oder bei sternartig angeordneten Reduktionsgasverteilerkanälen (2a, 2b) jeweils ein längerer (2a) neben einem kürzeren (2b) Reduktionsgasverteilerkanal angeordnet ist, wobei die kürzeren Reduktionsgasverteilerkanäle (2b) knapp oberhalb von den längeren Redüktionsgasverteilerkanälen (2a) angeordnet sind.

4. Vorrichtung nach Anspruch 3, **dadurch gekennzeichnet, dass** die sternartigangeordneten Reduktionsgasverteilerkanäle (2) unterschiedlich lang sind und die kürzeren Reduktionsgasverteilerkanäle (2b) bevorzugt fliegend gelagert sind.

5. Vorrichtung nach Anspruch 4, **dadurch gekennzeichnet, dass** die längeren Reduktionsgasverteilerkanäle (2a) über den Austragstrichtern (6) und die kürzeren Reduktionsgasverteilerkanäle (2b) über den Räumen zwischen den Austragstrichtern (6) angeordnet sind.

6. Vorrichtung nach Anspruch 3, **dadurch gekennzeichnet, dass** mindestens 2 parallel angeordnete Reduktionsgasverteilerkanäle (2) von der Reduktionsschachtwand bis zur gegenüberliegenden Reduktionsschachtwand durchgehend ausgeführt sind.

7. Vorrichtung nach Anspruch 6, **dadurch gekennzeichnet, dass** die Reduktionsgasverteilerkanäle (2) durch wassergekühlte Stützrohre (4) abgestützt sind.

## Claims

1. Process for producing sponge iron from iron-oxide-containing material in lump form by direct reduction in a reduction shaft using a reducing gas, **characterized in that** the entire reducing gas is introduced by means of a number of reducing gas distribution ducts in a star-like arrangement or arranged parallel to one another, preferably into the lower quarter of the reduction shaft, and evenly distributed over the entire cross section of the reduction shaft, the reducing gas distribution ducts being arranged on one level or, in the case of reducing gas distribution ducts in a star-like arrangement, a longer reducing gas distribution duct being respectively arranged alongside a shorter duct, the shorter reducing gas distribution ducts being arranged just above the longer reducing gas distribution ducts in such a way that there is virtually no difference in pressure when the reducing gas is introduced.

2. Process according to Claim 1, **characterized in that**, when the reduction shaft is charged, spaces that are free from fill are formed under the reducing gas distribution ducts, which are formed as downwardly open half-pipe shells, and from there the reducing gas passes uniformly into the fill.

3. Apparatus, for producing sponge iron from iron-oxide-containing material in lump form by direct reduction using a reducing gas, comprising a reduction shaft (1) and reducing gas distribution ducts (2) for feeding the entire reducing gas into the reduction shaft (1), **characterized in that** reducing gas distribution ducts (2a, 2b) in a star-like arrangement or reducing gas distribution ducts (2) arranged parallel to one another are provided in the lower quarter of the reduction shaft (1), the reducing gas distribution ducts (2, 2a, 2b) comprising downwardly open half-pipe shells with downwardly extended parallel walls and skid pipes (3), the reducing gas distribution ducts (2) being arranged on one level or, in the case of reducing gas distribution ducts (2a, 2b) in a star-like arrangement, a longer reducing gas distribution duct (2a) being respectively arranged alongside a shorter duct (2b), the shorter reducing gas distribution ducts (2b) being arranged just above the longer reducing gas distribution ducts (2a).

4. Apparatus according to Claim 3, **characterized in that** the reducing gas distribution ducts (2) in a star-like arrangement are of different lengths and the shorter reducing gas distribution ducts (2b) are with preference overhung-mounted.

5. Apparatus according to Claim 4, **characterized in that** the longer reducing gas distribution ducts (2a) are arranged over the discharge hoppers (6) and the shorter reducing gas distribution ducts (2b) are arranged over the spaces between the discharge hoppers (6).

6. Apparatus according to Claim 3, **characterized in that** at least 2 reducing gas distribution ducts (2) arranged in parallel are made to extend continuously from the wall of the reduction shaft to the opposite wall of the reduction shaft.

7. Apparatus according to Claim 6, **characterized in that** the reducing gas distribution ducts (2) are supported by water-cooled supporting pipes (4).

## Revendications

1. Procédé de production de mousse de fer à partir de matériau en morceaux contenant de l'oxyde de fer par réduction directe dans un puits réducteur en employant un gaz réducteur, **caractérisé en ce que** la totalité du gaz réducteur est introduite, au moyen de canaux de distribution du gaz réducteur placés en étoile ou parallèlement les uns aux autres, de préférence dans le quart inférieur du puits réducteur et répartie uniformément sur toute la section transversale du puits réducteur, sachant que les canaux de distribution du gaz réducteur sont placés dans un plan ou pour les canaux de distribution du gaz réducteur placés en étoile, un canal de distribution du gaz réducteur long respectif est placé à côté d'un canal de distribution du gaz réducteur plus court, sachant que les canaux de distribution du gaz réducteur plus courts sont ainsi placés juste au-dessus des canaux de distribution du gaz réducteur plus longs de telle façon qu'il ne se produit pratiquement aucune différence de pression lors de l'introduction du gaz réducteur.

2. Procédé selon la revendication 1, **caractérisé en ce que** lors de l'alimentation du puits réducteur, il se forme des espaces sans versement sous les canaux de distribution du gaz réducteur qui sont formés comme des tubes en demi-coquille ouverts vers le bas, desquels le gaz réducteur arrive de manière uniforme dans le versement.

3. Dispositif de production de mousse de fer à partir de matériau en morceaux contenant de l'oxyde de fer par réduction directe en employant un gaz réducteur, comprenant un puits réducteur (1) et des canaux de distribution du gaz réducteur (2) pour amener la totalité du gaz réducteur dans le puits réducteur (1), **caractérisé en ce que** dans le quart inférieur du puits réducteur (1) des canaux de distribution du gaz réducteur (2a, 2b) placés en étoile ou parallèlement les uns aux autres sont prévus, sachant que les canaux de distribution du gaz réducteur (2, 2a, 2b) présentent des tubes en demi-coquille ouverts vers le bas avec des parois parallèles prolongées vers le bas et des tubes porteurs (3), sachant que les canaux de distribution du gaz réducteur (2) sont placés dans un plan ou pour les canaux de distribution du gaz réducteur placés en étoile (2a, 2b), un canal de distribution du gaz réducteur long (2a) respectif est placé à côté d'un canal de distribution du gaz réducteur (2b) plus court, sachant que les canaux de distribution du gaz réducteur plus courts (2b) sont placés juste au-dessus des canaux de distribution du gaz réducteur plus longs (2a).

4. Dispositif selon la revendication 3, **caractérisé en ce que** les canaux de distribution du gaz réducteur (2) placés en étoile sont de longueurs différentes et que les canaux de distribution du gaz réducteur (2b) plus courts sont placés de préférence en porte-à-faux.

5. Dispositif selon la revendication 4, **caractérisé en ce que** les canaux de distribution du gaz réducteur plus longs (2a) sont placés sur les entonnoirs d'évacuation (6) et les canaux de distribution du gaz réducteur plus courts (2b) sur les espaces entre les entonnoirs d'évacuation (6).

6. Dispositif selon la revendication 3, **caractérisé en ce qu'**au moins 2 canaux de distribution du gaz réducteur (2) en parallèle sont dirigés de manière traversante depuis la paroi du puits réducteur jusqu'à la paroi du puits réducteur opposée.

7. Dispositif selon la revendication 6, **caractérisé en ce que** les canaux de distribution du gaz réducteur (2) sont soutenus par des tubes d'appui (4) refroidis par eau.
